# EUROPÄISCHE PATENTSCHRIFT

(11) **EP 1 020 615 B1**
(45) Veröffentlichungstag und Bekanntmachung des Hinweises auf die Patenterteilung: **30.11.2005**
(21) Anmeldenummer: 99250448.0
(22) Anmeldetag: 24.12.1999
(51) Int. Cl.: E21B 17/08, E21B 17/00, E21B 7/20

(54) **Rohrvortriebsverfahren zur unterirdischen Verlegung von Rohrleitungen und Vortriebsrohr zur Durchführung des Verfahrens**
Feeding method for laying underground pipes and pipe for carrying out this method
Procédé d'avance pour la pose souterraine de conduites et tube pour la mise en oeuvre du procédé

(30) Priorität: 11.01.1999 DE 19901497
(43) Veröffentlichungstag der Anmeldung: 19.07.2000
(73) Patentinhaber: Gildemeister Tief-, Stahlbeton- und Rohrleitungsbau GmbH & Co. KG, 13409 Berlin (DE)
(72) Erfinder: Hentrich, Michael, Dipl.-Berging., 10829 Berlin (DE)
(74) Vertreter: Wablat, Wolfgang

(56) Entgegenhaltungen:
- DE-A- 4 114 232
- DE-A- 4 127 992
- DE-A- 4 243 353
- DE-C- 3 445 124
- DE-U- 29 611 452
- US-A- 4 552 485

## Beschreibung

Die Erfindung betrifft ein Rohrvortriebsverfahren zur unterirdischen Verlegung von Rohrleitungen, bei dem von einer in einem Preßschacht angeordneten Preßstation nacheinander einzelne Vortriebsrohre im Erdreich vorgetrieben und unter Verwendung von den Rohrstrang in Sektionen einteilenden Zwischenpreßstationen zu einer eine Gelenkkette bildenden Rohrleitung aneinandergereiht werden, und bezieht sich weiterhin auf ein Vortriebsrohr zur Durchführung des Verfahrens.

Ein Verfahren zur Herstellung des Verbundrohres ist aus DE-A-4 127 992 bekannt.

Derartige Verfahren zur Herstellung von Rohrdurchpressungen sind hinreichend bekannt. Von einer in einem Preßschacht oder Startschacht angeordneten, vorzugsweise hydraulisch angetriebenen Preßvorrichtung wird zunächst ein auf einer Gleitbahn befindliches Stahlschild oder ein Schneidschuh oder eine Tunnelvortriebsmaschine als Vortriebsspitze durch eine in der vorderen Schachtwand befindliche Öffnung in den Boden gepreßt. Nacheinander werden auf diese Weise einzelne Vortriebsrohre unter Bildung eines Rohrstranges in den Boden gedrückt, wobei sich die Vortriebsrohre an ihren Stirnseiten jeweils unter Zwischenschaltung einer verformbaren Zwischenlage aneinander abstützen, um die Preßkraft auf das in Vortriebsrichtung jeweils davorliegende Vortriebsrohr und damit auf die bereits im Erdreich befindliche Rohrleitung zu übertragen. An den aneinanderstoßenden Enden der Vortriebsrohre sind Dichtungen vorgesehen, um einen zwar in sich beweglichen, aber dichten Rohrstrang zu schaffen. Auf diese Weise ist es theoretisch möglich, eine beliebig lange, aus Einzelrohren gebildete Rohrkolonne in den Boden zu pressen, während an der Vortriebsspitze mit dem Schild gleichzeitig der erforderliche Materialabbau erfolgt.

Mit dem Anwachsen der Vortriebslänge steigen aufgrund der größer werdenden Rohrreibung auch die Preßkräfte, die jedoch durch die Belastbarkeit der Vortriebselemente und der rückwärtigen Schachtwand begrenzt sind. Um die Rohrkolonne dennoch weiter im Boden vortreiben zu können, werden in bestimmten Abständen zwischen zwei benachbarten Vortriebsrohren Zwischenpreßstationen angeordnet, die die Rohrkolonne in Sektionen unterteilen, so daß mit den Zwischenpreßstationen jeweils einzelne Sektionen der Rohrkolonne, bei denen die Reibung am Außenumfang geringer als am gesamten Rohrstrang ist, vorgetrieben werden können.

Die Vortriebsrohre bestehen zumeist aus Stahlbeton und weisen daher an den Stirnseiten eine ausreichend große Kraftübertragungsfläche zwischen aneinandergrenzenden Vortriebsrohren bzw. zwischen einem Vortriebsrohr und einer Hauptpreßstation bzw. Zwischenpreßstation auf. Die bewegliche Verbindung der einzelnen Vortriebsrohre an den Stirnseiten über Dichtungselemente sorgt auch für die gewünschte Flexibilität des gesamten Rohrstranges und dessen Ausbildung als Gelenkkette, so daß über den Schneidschuh an der Vortriebsspitze die Vortriebsrichtung gesteuert werden kann.

Nachteilig bei diesem Verfahren und den entsprechend ausgebildeten Vortriebsrohren ist jedoch die Tatsache, daß durch größere Richtungsänderungen während des Vortriebes oder bei erhöhtem Innendruck, z.B. bereits bei der Dichtheitsprüfung des Rohrstranges unter erhöhtem Innendruck oder beim Transport von flüssigen oder gasförmigen Medien unter Druck, in dem gelenkigem Rohrstrang Zugkräfte auftreten, die mit Abdichtungsproblemen an den Rohrstößen verbunden sind.

Zur Vermeidung der genannten Nachteile könnte die Verwendung von aus Stahl bestehenden, miteinander verschweißbaren Vortriebsrohren eine Alternative zu den oben beschriebenen Rohrvortriebsverfahren mit Stahlbetonrohren darstellen. Dazu müßten die Enden der jeweils im Preßschacht befindlichen Vortriebsrohre vor dem Preßhub miteinander verschweißt werden, so daß ein zwar dichter, aber starrer Rohrstrang im Erdreich vorgetrieben wird. Dieses Verfahren ist jedoch für lange Vorpreßstrecken nicht geeignet, weil die Vortriebsrichtung ab einer bestimmten Stranglänge aufgrund des starren Rohrstranges nicht mehr steuerbar ist, die auf den Rohrstrang aufzubringenden Preßkräfte durch die Belastbarkeit der Schweißnähte zwischen den aneinanderstoßenden Vortriebsrohren begrenzt ist und die bei langen Rohrsträngen aufgrund der Reibung an der Rohroberfläche notwendigen hohen Preßkräfte nicht durch den Einbau von Zwischenpreßstationen gemindert werden können, da die kleinen Stirnseiten der Vortriebsrohre aus Stahl nicht geeignet sind, die von den Zwischenpreßstationen ausgeübten Kräfte aufzunehmen und zu übertragen. Der erforderliche Schweißvorgang im Preßschacht hätte zudem eine längere Unterbrechung des Vortriebsvorganges zur Folge.

Der Erfindung liegt daher die Aufgabe zugrunde, ein Rohrvortriebsverfahren anzugeben, mit dem auf Zug- und Druckkräfte beanspruchbare, in der Richtung steuerbare, lange und dichte Rohrstränge hergestellt werden können. Ein weiteres Ziel der Erfindung besteht in der Bereitstellung eines zur Durchführung des Verfahrens ausgebildeten Vortriebsrohres.

Erfindungsgemäß wird die Aufgabe bei einem Vortriebsverfahren gemäß dem Oberbegriff des Patentanspruchs 1 in der Weise gelöst, daß die Vortriebsrohre über einen zur Aufnahme der Preßkräfte mit einem Innenrohr verbundenen starken Rohrmantel in das Erdreich gepreßt und der Rohrstrang während des Vortriebs in Längsrichtung gelenkig geführt wird und daß nach Abschluß des Rohrvortriebes des gesamten Rohrstranges die Vortriebsrohre über die Innenrohre längskraftschlüssig starr miteinander verbunden werden.

Das erfindungsgemäße Vortriebsrohr zur Durchführung des Verfahrens ist durch einen Verbund aus einem dünnwandigen Innenrohr und einem Rohrmantel, dessen Stärke zur Aufnahme und Übertragung der Preßkräfte ein Vielfaches der Wandstärke des Innenrohres beträgt, gekennzeichnet, wobei die Innenrohre bezüglich der Wandstärke so dimensioniert sind, daß sie im Betriebszustand dem auf diese wirkenden Innen- und Außendruck auch ohne Rohrmantel standhalten und im Rohrstrang benachbarte Innenrohre kraftschlüssig miteinander verbindbar und benachbarte Rohrmäntel mit Hilfe von Dichtelementen zueinander abgedichtet sind.

Mit dem erfindungsgemäßen Verfahren und dem entsprechend ausgebildeten Vortriebsrohr können Rohrleitungen in der gewünschten Länge und mit der Möglichkeit der Steuerung der Bewegungsrichtung des Rohrstranges durch Rohrvortrieb unterirdisch verlegt werden. Gleichzeitig wird ein längskraftschlüssig verbundener, homogener Rohrstrang geschaffen, der auch bei in axialer und radialer Richtung wirkenden Kräften in sich stabil bleibt und keine Abdichtungsprobleme bereitet.

Vorzugsweise ist das erfindungsgemäße Rohrsystem aufgrund seiner inneren und äußeren Abdichtung auch zur Anwendung in Wasserschutzzonen geeignet, und zwar als Ersatz für die dort erforderlichen Doppelrohrsysteme.

Nach einem weiteren Merkmal der Erfindung besteht das Innenrohr aus Stahl, während der Rohrmantel aus Stahlbeton, vorzugsweise Stahlfaserbeton, besteht, wobei die starre Verbindung zwischen den Innenrohren jeweils benachbarter Vortriebsrohre durch Schweißen erfolgt.

Neben Stahl können für die Innenrohre auch andere metallische Werkstoffe oder thermoplastische oder duroplastische Kunststoffe eingesetzt werden, wobei die Verbindung der Innenrohre nach herkömmlichen Verfahren erfolgt. Die Innenrohre sind bezüglich der Wandstärke so dimensioniert, daß sie im Betriebszustand dem auf diese wirkenden Innen- und Außendruck auch ohne Rohrmantel standhalten.

In weiterer Ausbildung der Erfindung weist das Vortriebsrohr an einer Stirnseite einen über diese hinausragenden Montagering auf, der mit der Außenseite des Innenrohres fest verbunden ist. Das freie Ende des Montageringes greift während des Rohrvortriebs teleskopartig und mit Spiel in eine umlaufende Ausnehmung zwischen dem Innenrohr und dem Rohrmantel des benachbarten Vortriebsrohres ein. Dieser Montagering dient der gelenkigen Führung der aneinandergereihten Vortriebsrohre während des Rohrvortriebs. Gleichzeitig dient er im Betriebszustand des Rohrstranges nach dem Vorpressen als Befestigungsmittel bzw. Verbindungsstück zwischen benachbarten Innenrohren.

In Ausgestaltung der Erfindung ist an einem Ende des Vortriebsrohres in die Umfangsfläche des Rohrmantels ein weiterer, über die Stirnfläche hinausragender Führungsring eingelassen, der zur fluchtenden Ausrichtung und gegenseitigen Halterung benachbarter Vortriebsrohre beiträgt und über Dichtringe mit der Außenfläche des gegenüberliegenden (angrenzenden) Vortriebsrohres in Verbindung steht. Dadurch ist die Abdichtung an den Außenflächen des Rohrstranges und gleichzeitig die gelenkige Beweglichkeit der Vortriebsrohre zueinander während des Rohrvortriebs gewährleistet.

Weitere Merkmale und zweckmäßige Weiterbildungen der Erfindung ergeben sich aus der nachfolgenden Beschreibung einer beispielshaft wiedergegebenen Ausführungsform der Erfindung sowie aus den Unteransprüchen.

Ein Ausführungsbeispiel der Erfindung wird anhand der Zeichnung näher erläutert. Es zeigen:
Figur 1 eine schematische Darstellung des Rohrvortriebsverfahrens mit den erfindungsgemäß ausgebildeten Vortriebsrohren;
Figur 2 eine detaillierte Schnittansicht im Bereich der einander gegenüberliegenden Stirnseiten zweier Vortriebsrohre vor dem Aneinanderfügen im Preßschacht; und
Figur 3 eine Schnittansicht im Bereich der stirnseitig miteinander längskraftschlüssig verbundenen Rohrwandungen im Betriebszustand der unterirdisch verlegten Rohrleitung.

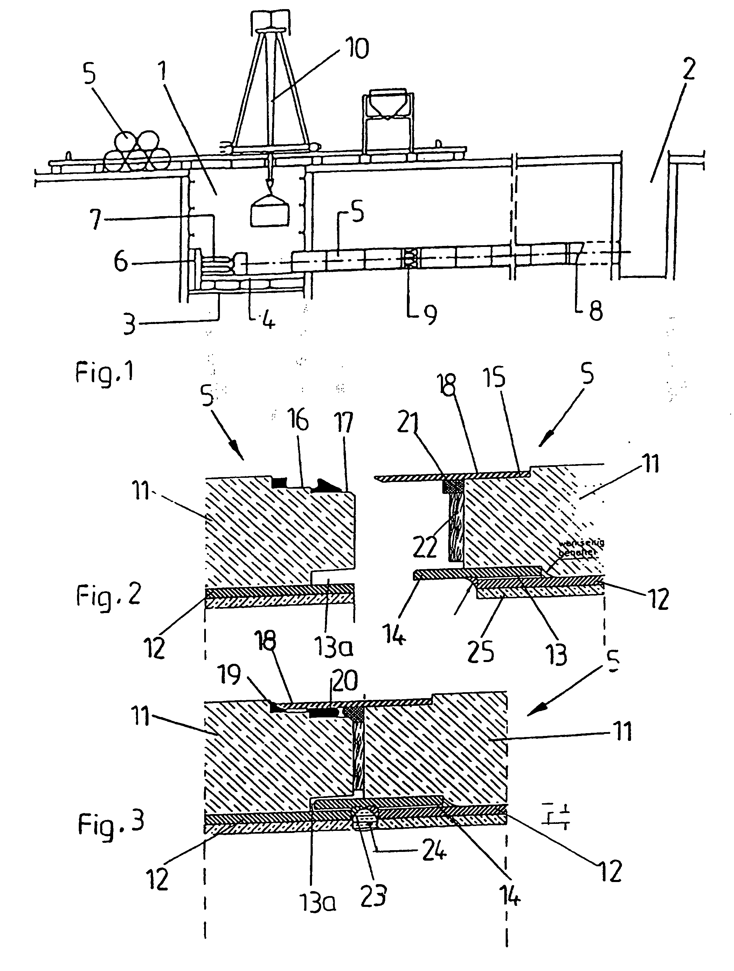

Gemäß Figur 1 befinden sich am Anfang und Ende eines zu verlegenden Rohrstranges ein Startschacht oder Preßschacht 1 und ein Zielschacht 2. In dem Preßschacht 1 ist auf einer Betonsohle 3 ein Führungsrahmen 4 zur Aufnahme und Führung des jeweils vorzutreibenden Vortriebsrohres 5 sowie eine an einer Widerlagerkonstruktion 6 abgestützte Hauptpreßstation 7 angeordnet. An dem in Vortriebsrichtung ersten Vortriebsrohr ist ein Schneidschuh 8 vorgesehen, über den der gewonnene Boden in das Rohrinnere gelangt, um daraus mit geeigneten Fördermitteln (nicht dargestellt) entfernt und nach außen verbracht zu werden. In den Rohrstrang ist zwischen den gegenüberliegenden Stirnseiten zweier Vortriebsrohre 5 eine hydraulische Zwischenpreßstation 9 eingebunden. Das Einbringen der Vortriebsrohre 5 in den Preßschacht 1 erfolgt mit einer Hebevorrichtung 10.

Die Vortriebsrohre 5 sind, wie aus Figur 2 hervorgeht, als Verbundrohre aus einem zur Preßkraftübertragung in großer Wandstärke ausgebildeten Rohrmantel 11 aus Stahlfaserbeton und einem der längskraftschlüssigen Verbindung der einzelnen Vortriebsrohre 5 dienenden Innenrohr 12 aus Stahl ausgeführt. Im Ausführungsbeispiel steht bei einem Rohrstrang mit einem Durchmesser von dᵢ = 1200 mm einer Wandstärke sᵢ des Innenrohres 12 von 11 mm eine Wandstärke SRM des Rohrmantels 11 von 130 mm gegenüber. Das heißt, die Wandstärke des Rohrmantels beträgt ein Mehrfaches der Wandstärke des Innenrohres 12. An den stirnseitigen Enden des Vortriebsrohres 5 ist zwischen dem Innenrohr 12 und dem Rohrmantel 11 eine umlaufende Ausnehmung 13, 13a vorgesehen, wobei in der an einer Stirnseite des Vortriebsrohres 5 ausgebildeten Ausnehmung 13 ein Montagering 14 angeschweißt ist, der über die Stirnseite des Vortriebsrohres 5 hinausragt und in aneinandergefügtem Zustand der Vortriebsrohre 5 teleskopartig und mit seitlichem Spiel in die gegenüberliegende umlaufende Ausnehmung 13 a des angrenzenden Vortriebsrohres 5 eingreift. Die Ausnehmung 13 a ist geringfügig weiter als die Wandstärke des Montageringes 14, der daher mit Spiel in der Ausnehmung 13 a liegt und während des Vortriebs eine gelenkige Verbindung zwischen den Vortriebsrohren 5 schafft.

An einem Ende der Vortriebsrohre 5 befinden sich an der Außenseite des Rohrmantels 11 umlaufende Vertiefungen 15 bzw. 16, 17, in die ein am Ende des jeweils benachbarten Vortriebsrohres angebrachter Führungsring 18 eingreift, um einerseits die aneinanderstoßenden Vortriebsrohre 5 beim Vorpressen in beliebiger Richtung zu führen, d.h. ein Ausweichen senkrecht zur Vortriebsrichtung zu verhindern, und um andererseits beim Vorpressen und im Betriebszustand eine Abdichtung mit Hilfe von Dichtringen 19, 20 sowie 21 nach außen zu schaffen.

Die Montage der Vortriebsrohre 5 im Preßschacht 1 erfolgt nun in der Weise, daß ein mit der Hebevorrichtung 10 auf dem Führungsrahmen 4 abgelegtes Vortriebsrohr 5 mit den überstehenden Enden des Montageringes 14 und des Führungsringes 18 in bzw. auf die gegenüberliegende Ausnehmung 13 a bzw. die Vertiefungen 16, 17 geschoben wird, und zwar bis die beiden Stirnflächen des Rohrmantels 11 der aneinandergrenzenden Vortriebsrohre über einen zwischen diesen angeordneten Druckübertragungsring 22 aneinander zum Anschlag kommen. Anschließend wird mit der Hauptpreßstation 7 eine Preßkraft auf das auf dem Führungsrahmen 4 befindliche Vortriebsrohr 5, d.h. auf die freie Stirnfläche des Rohrmantels 11 ausgeübt und damit der bis zu einer Zwischenpreßstation 9 reichende Rohrstrang in Richtung Zielschacht 2 verschoben. Zuvor wurde bereits der in Vortriebsrichtung vor der Zwischenpreßstation 9 liegende Abschnitt des Rohrstranges mit Hilfe der Zwischenpreßstation durch das Erdreich gepreßt.

Auf diese Weise kann - gegebenenfalls unter Verwendung weiterer Zwischenpreßstationen - ein langer Rohrstrang unterirdisch vorgepreßt werden, wobei sich benachbarte Vortriebsrohre 5 nicht senkrecht zur Vortriebsrichtung gegeneinander verschieben können und dennoch eine gelenkige Verbindung der Vortriebsrohre 5 zueinander möglich ist. Durch diese gelenkige Verbindung zwischen den Vortriebsrohren 5 kann die Richtung des Rohrstranges während des Vortriebs gesteuert werden.

Nachdem die Rohrkolonne in der gewünschten Richtung ihre endgültige Länge erreicht hat, werden die Vortriebsrohre 5 über die Innenrohre 12 miteinander verbunden, indem der Montagering 14 mit dem Innenrohr 12 des angrenzenden Vortriebsrohres, an dem er während des Preßvortriebs beweglich gelagert war, mit Hilfe einer manuell, halbautomatisch oder automatisch betätigten Schweißvorrichtung (nicht dargestellt) verschweißt wird. Dadurch wird ein längkraftschlüsssig verbundener Rohrstrang zur Verfügung gestellt, der auch bei in axialer und radialer Richtung wirkenden Kräften, den Anforderungen an die Stabilität und Dichtheit genügt.

Im Ausführungsbeispiel ist der Montagering 14 in der Länge so dimensioniert, daß zwischen den gegenüberliegenden Stirnseiten der Innenrohre 12 ein Raum zur Anbringung einer Schweißnaht 23 verbleibt, der anschließend durch eine Zementvermörtelung 24, die sich an eine an der Innenseite des Innenrohres 12 vorgesehene Zementmörtelschicht 25 anschließt, verschlossen bzw. aufgefüllt wird.

### Bezugszeichenliste

- 1: Preßschacht (Startschacht)
- 2: Zielschacht
- 3: Betonsohle
- 4: Führungsrahmen
- 5: Vortriebsrohr
- 6: Widerlagerkonstruktion
- 7: Hauptpreßstation
- 8: Schneidschuh
- 9: Zwischenpreßstation
- 10: Hebevorrichtung
- 11: Rohrmantel
- 12: Innenrohr
- 13, 13 a: umlaufende Ausnehmung
- 14: Montagering
- 15, 16, 17: umlaufende Vertiefung
- 18: Führungsring
- 19, 20, 21: Dichtring
- 22: Druckübertragungsring
- 23: Schweißnaht
- 24: Zementvermörtelung
- 25: Zementmörtelschicht

## Patentansprüche

1. Rohrvortriebsverfahren zur unterirdischen Verlegung von Rohrleitungen, bei dem von einer in einem Preßschacht angeordneten Preßstation nacheinander einzelne Vortriebsrohre im Erdreich vorgetrieben und gegebenenfalls unter Verwendung von den Rohrstrang in Sektionen einteilenden Zwischenpreßstationen zu einer eine Gelenkkette bildenden Rohrleitung aneinander gereiht werden, **dadurch gekennzeichnet, daß** die Vortriebsrohre (5) über einen zur Aufnahme der Preßkräfte mit einem Innenrohr (12) verbundenen Rohrmantel (11) in das Erdreich gepreßt und der Rohrstrang während des Vortriebes in Längsrichtung gelenkig geführt wird und daß nach Abschluß des Rohrvortriebes des gesamten Rohrstranges die Vortriebsrohre (5) über die Innenrohre (12) längskraftschlüssig starr miteinander verbunden werden.

2. Verfahren nach Anspruch 1, **dadurch gekennzeichnet, daß** die Preßkräfte auf die Stirnseiten des Rohrmantels (11) bzw. zwischen diesen übertragen werden.

3. Verfahren nach Anspruch 1 und 2, **dadurch gekennzeichnet, daß** die Verbindung der Innenrohre (12) durch Schweißen, Kleben, Laminieren oder ähnliche Verfahren erfolgt.

4. Verfahren nach einem der Ansprüche 1 bis 3, **dadurch gekennzeichnet, daß** die Preßkraftübertragung zwischen den Stirnseiten der Rohrmäntel (11) über einen plastisch verformbaren Druckübertragungsring (22) erfolgt.

5. Vortriebsrohr zur Durchführung des Verfahrens nach Anspruch 1, **gekennzeichnet durch** einen Verbund aus einem dünnwandigen Innenrohr (12) und einem starken Rohrmantel (11), dessen Stärke zur Aufnahme und Übertragung der Preßkräfte ein Vielfaches der Wandstärke des Innenrohres (12) beträgt, wobei die Innenrohre (12) bezüglich der Wandstärke so dimensioniert sind, daß sie im Betriebszustand dem auf diese wirkenden Innen- und Außendruck auch ohne Rohrmantel standhalten und im Rohrstrang benachbarte Innenrohre (12) kraftschlüssig miteinander verbindbar und aneinandergrenzende Rohrmäntel (11) mit Hilfe von Dichtelementen zueinander abgedichtet sind.

6. Vortriebsrohr nach Anspruch 5, **dadurch gekennzeichnet, daß** das Innenrohr (12) aus metallischen Werkstoffen oder thermoplastischen oder duroplastischen Kunststoffen besteht und der Rohrmantel (11) aus Stahlbeton, Stahlfaserbeton, Polymerbeton oder glasfaserverstärktem Kunststoff gebildet ist.

7. Vortriebsrohr nach einem der Ansprüche 5 und 6, **dadurch gekennzeichnet, daß** bei einem aus Stahl bestehenden Innenrohr (12) an dessen einer Stirnseite ein über diese hinausragender, mit der Außenseite des Innenrohres (12) fest verbundener Montagering angebracht ist, der während des Preßvortriebes mit seinem freien Ende teleskopartig und mit seitlichem Spiel in eine ringförmige Ausnehmung (13 a) zwischen dem Innenrohr (12) und dem Rohrmantel (11) des benachbarten Vortriebsrohres (5) eingreift.

8. Vortriebsrohr nach Anspruch 7, **dadurch gekennzeichnet, daß** die die längskraftschlüssige Verbindung der Vortriebsrohre (5) herstellende Schweißnaht (23) an dem Montagring (14) und dem Innenrohr (12) des benachbarten Vortriebsrohres ausgebildet ist.

9. Vortriebsrohr nach einem der Ansprüche 7 und 8, **dadurch gekennzeichnet, daß** die Innenrohre (12) an ihrer Innenfläche eine Schutzbeschichtung aufweisen, die nachträglich auch auf den Schweißnahtbereich, in dem der Montagering mit beiden Innenrohren (12) verbunden ist, aufbringbar ist.

10. Vortriebsrohr nach einem der Ansprüche 5 bis 9, **dadurch gekennzeichnet, daß** an seinem einen Ende ein in die Umfangsfläche des Rohrmantels (11) eingelassener und über dessen Stirnfläche hinausragender Führungsring (18) vorgesehen ist und an dem gegenüberliegenden Ende des Vortriebsrohres am Umfang des Rohrmantels (11) umlaufende Vertiefungen (16, 17) mit Dichtringen (19, 20) ausgebildet sind, die im Montage- und Betriebszustand des Rohrstranges mit der Innenfläche des Führungsringes (18) in abdichtender Verbindung stehen.

## Claims

1. A pipe driving method for the subterranean laying of pipes wherein, from a driving station located in a driving shaft, individual drive pipes are advanced through the soil and optionally lined up to form an articulated chain using intermediate driving stations that divide the pipeline into sections, **characterized in that** the drive pipes (5) are pushed into the soil using a pipe shell (11) that absorbs the forces of pressure and is connected to an inside pipe (12), **in that** the pipeline is unfolded in longitudinal direction from the articulated chain during the driving operation, and **in that** the drive pipes (5) are rigidly connected and friction-locked via the inside pipes (12) when the driving operation is completed.

2. The method according to claim 1, **characterized in that** the forces of pressure are transmitted to or between the front ends of the pipe shell (11).

3. The method according to claims 1 and 2, **characterized in that** the connection of the inside pipes (12) is made by welding, bonding, laminating or similar methods.

4. The method according to any one of claims 1 to 3, **characterized in that** the forces of pressure are transmitted between the front ends of the pipe shell (11) and a malleable pressure transfer ring (22).

5. A drive pipe for performing the method according to claim 1, **characterized by** a combination of a thin-walled inside pipe (12) and a thick pipe shell (11) the thickness of which is multiple times the wall thickness of the inside pipe (12) so that it can absorb and transfer the forces of pressure, the wall thickness of the inside pipes being dimensioned so that they can withstand the inner and outer pressures when in operation even without the pipe shell, and in that adjacent inside pipes in the pipeline can be friction-locked while adjacent pipe shells (11) are sealed against each other using packing elements.

6. The drive pipe according to claim 5, **characterized in that** the inside pipe (12) consists of metallic materials or thermoplastics or duroplastics and the pipe shell (11) is made of reinforced concrete, concrete polymer, or glass fiber reinforced plastics.

7. The drive pipe according to one of claims 5 and 6, **characterized in that**, if the inside pipe (12) is made of steel, the free end of an assembly ring that is firmly attached to the outer side of the inside pipe (12) and protrudes beyond its front end telescopically engages with lateral play in an annular recess (13 a) between the inside pipe (12) and the pipe shell (11) of the adjacent drive pipe (5).

8. The drive pipe according to claim 7, **characterized in that** the weld (23) that produces the longitudinally friction-locked connection of the drive pipes (5) is formed on the assembly ring (14) and the inside pipe (12) of the adjacent drive pipe.

9. The drive pipe according to one of claims 7 and 8, **characterized in that** the inside pipes (12) have a protective coating on their inner surfaces that can later be applied to the weld section in which the assembly ring is connected with both inside pipes (12).

10. The drive pipe according to any one of claims 5 to 9, **characterized in that** a guide ring (18) is embedded in the peripheral surface of the pipe shell (11) and protrudes beyond its front end and that peripheral grooves (16, 17) with sealing rings (19, 20) are provided on the opposite end of the drive pipe along the periphery of the pipe shell (11) that form a sealing connection with the inner surface of the guide ring (18) when the pipeline is in operation.

## Revendications

1. Procédé d'avancement de tubage pour la pose souterraine de canalisations, dans lequel, depuis une station de pressage agencée dans un puits de descente, des tubes d'avancement individuels sont avancés les uns après les autres dans le terrain et sont éventuellement alignés les uns aux autres en utilisant des stations de pressage intermédiaires divisant la ligne de tube en sections pour former une conduite tubulaire formant une chaîne articulée, **caractérisé en ce que** les tubes d'avancement (5) sont pressés dans le terrain via une enveloppe de tube (11) reliée à un tube intérieur (12) pour encaisser les forces de pressage, et la ligne de tube est guidée de manière articulée en direction longitudinale pendant l'avancement, et **en ce qu'**une fois l'avancement du tubage de toute la ligne de tube terminé, les tubes d'avancement (5) sont reliés de manière rigide les uns aux autres par coopération de forces longitudinales via les tubes intérieurs (12).

2. Procédé selon la revendication 1, **caractérisé en ce que** les forces de pressage sont transmises sur les faces frontales de l'enveloppe de tube (11) ou entre celles-ci.

3. Procédé selon la revendication 1 et 2, **caractérisé en ce que** la liaison des tubes intérieurs (12) a lieu par soudure, collage, laminage ou par des procédés similaires.

4. Procédé selon l'une des revendications 1 à 3, **caractérisé en ce que** la transmission des forces de pressage entre les faces frontales des enveloppes de tubes (11) a lieu via une bague de transmission de pression (22) plastiquement déformable.

5. Tube d'avancement pour mettre en oeuvre le procédé selon la revendication 1, **caractérisé par** une combinaison d'un tube intérieur (12) à paroi mince et d'une enveloppe de tube (11) épaisse, dont l'épaisseur pour encaisser et transmettre les forces de pressage est un multiple de l'épaisseur de paroi du tube intérieur (12), les tubes intérieurs (12) ayant des dimensions telles du point de vue de l'épaisseur de paroi qu'à l'état de fonctionnement, ils résistent à la pression intérieure et à la pression extérieure agissant sur ceux-ci, même sans enveloppe de tube, des tubes intérieurs (12) voisins dans la ligne de tube pouvant être reliés les uns aux autres par coopération de forces et des enveloppes de tubes (11) adjacentes étant étanchées les unes par rapport aux autres à l'aide d'éléments d'étanchéité.

6. Tube d'avancement selon la revendication 5, **caractérisé en ce que** le tube intérieur (12) est constitué par des matériaux métalliques ou des matières thermoplastiques ou duroplastiques, et **en ce que** l'enveloppe de tube (11) est formée en béton armé, en béton à fibres d'acier, en béton au polymère ou en matière plastique renforcée par fibres de verre.

7. Tube d'avancement selon l'une des revendications 5 ou 6, **caractérisé en ce que**, dans un tube intérieur (12) en acier sur l'une des faces frontales duquel est montée une bague de montage faisant saillie au-delà de celle-ci et reliée de manière solidaire à la face extérieure du tube intérieur (12), ladite bague s'engage, pendant l'avancement par pressage, par son extrémité libre de manière télescopique et avec jeu latéral dans un évidement annulaire (13a) entre le tube intérieur (12) et l'enveloppe de tube (11) du tube d'avancement (5) voisin.

8. Tube d'avancement selon la revendication 7, **caractérisé en ce que** le cordon de soudure (23) produisant la liaison par coopération de forces longitudinales des tubes d'avancement (5) est réalisé sur la bague de montage (14) et sur le tube intérieur (12) du tube d'avancement voisin.

9. Tube d'avancement selon l'une des revendications 7 et 8, **caractérisé en ce que** les tubes intérieurs (12) présentent sur leur surface intérieure un revêtement de protection qui peut aussi être appliqué ultérieurement sur la région du cordon de soudure dans laquelle la bague de montage est reliée aux deux tubes intérieurs (12).

10. Tube d'avancement selon l'une des revendications 5 à 9, **caractérisé en ce qu'**il est prévu à une de ses extrémités une bague de guidage (18) encastrée dans la surface périphérique de l'enveloppe de tube (11) et dépassant sa face frontale, et **en ce que** sur l'extrémité opposée du tube d'avancement sont réalisés sur la périphérie de l'enveloppe de tube (11) des creux (16, 17) périphériques avec des bagues d'étanchéité (19, 20) qui, à l'état de montage et de fonctionnement de la ligne de tube, sont en liaison d'étanchéité avec la surface intérieure de la bague de guidage (18).
